# FASCICULE DE BREVET EUROPEEN

(11) **EP 2 198 573 B1**
(45) Date de publication et mention de la délivrance du brevet: **29.03.2017**
(21) Numéro de dépôt: 08838617.2
(22) Date de dépôt: 24.09.2008
(51) Int. Cl.: H04L 12/70

(54) **PROCÉDÉ POUR FAIRE COMMUNIQUER ENTRE EUX UNE PLURALITÉ DE NOEUDS D'EXTRÉMITÉ À TRAVERS UN RÉSEAU DE COMMUNICATION**
VERFAHREN ZUR HERSTELLUNG VON INTERKOMMUNIKATION ZWISCHEN MEHREREN ENDKNOTEN ÜBER EIN KOMMUNIKATIONSNETZ
METHOD FOR ESTABLISHING INTERCOMMUNICATION BETWEEN A PLURALITY OF END NODES VIA A COMMUNICATION NETWORK

(30) Priorité: 25.09.2007 FR 0757825
(43) Date de publication de la demande: 23.06.2010
(73) Titulaire: Orange, 75015 Paris (FR)
(72) Inventeur: LE ROUX, Jean-Louis, F-22300 Lannion (FR); CHAITOU, Mohamad, F-75018 Paris (FR)
(86) Numéro de dépôt international: PCT/FR2008/051705
(87) Numéro de publication internationale: WO 2009/050369

(56) Documents cités:
- US-A1- 2006 221 867
- BROCKNERS I WIJNANDS A SAJASSI CISCO SYSTEMS F: "Label Distribution Protocol Extensions for Half-Duplex Multipoint-to-Multipoint Label Switched Paths; draft-brockners-ldp-half-duplex-mp2mp-01.t xt" IETF STANDARD-WORKING-DRAFT, INTERNET ENGINEERING TASK FORCE, IETF, CH, no. 1, 18 septembre 2007 (2007-09-18), XP015050794 ISSN: 0000-0004
- SEISHO YASUKAWA (EDITOR) NTT: "Supporting Multipoint-to-Point Label Switched Paths in Multiprotocol Label Switching Traffic Engineering; draft-yasukawa-mpls-mp2p-rsvpte- 03.txt" IETF STANDARD-WORKING-DRAFT, INTERNET ENGINEERING TASK FORCE, IETF, CH, no. 3, 1 août 2007 (2007-08-01), XP015052362 ISSN: 0000-0004

## Description

L'invention concerne une technique pour faire communiquer entre eux une pluralité de noeuds d'extrémité à travers un réseau de communication.

Cette invention se situe dans le domaine des réseaux de communication et plus particulièrement les réseaux de transport de paquets en mode connecté.

Un réseau de communication par commutation d'étiquettes multi-protocole ou réseau IP/MPLS, pour "Multi-Protocol Label Switching" est constitué d'un ensemble de routeurs, dont certains sont des routeurs de coeur, c'est-à-dire des routeurs dédiés à l'acheminement des paquets, et d'autres des routeurs d'accès, c'est-à-dire des routeurs assurant l'interconnexion entre le réseau de communication IP et le réseau MPLS. L'ensemble des routeurs d'accès du réseau sont raccordés par des tunnels MPLS. Ils permettent d'établir une connectivité de bout en bout entre deux équipements terminaux. Il existe deux modes pour l'établissement de tunnels MPLS, un premier mode dit, mode non connecté reposant sur le protocole LDP, et un deuxième mode, dit mode connecté, reposant sur le protocole RSVP-TE, pour "Resource ReserVation Protocol-Traffic Engineering", tel que spécifié dans le document RFC 3209 par l'IETF, pour Internet Engineering Task Force". Ce deuxième mode est encore appelé mode MPLS-TE et permet de mettre en oeuvre des fonctions d'ingénierie de trafic avancées comme l'optimisation fine de la bande passante, le contrôle d'admission, et le re-routage rapide en cas de panne. Lors de l'établissement d'un tunnel de type MPLS-TE, les ressources, telles que la bande passante, sont explicitement réservées sur l'ensemble des liens empruntés en prenant en compte les contraintes de trafic et les ressources disponibles dans le réseau. Le mécanisme MPLS-TE (MPLS Traffic Engineering) permet l'établissement de chemins à commutation d'étiquettes ou LSP pour «Label Switched Path » MPLS, routés de façon explicite en fonction de contraintes de trafic et des ressources disponibles dans le réseau. Ces LSP MPLS sont appelés TE-LSP ou encore «tunnels MPLS-TE». La technologie MPLS-TE est utilisée pour le transport d'applications à fortes contraintes de bande passante, de qualité de service et de disponibilité, telles que des applications de voix, de vidéo, ou de télévision. Les tunnels MPLS-TE sont établis de façon automatique par le protocole de signalisation RSVP-TE. Ces tunnels MPLS-TE peuvent être assimilés à des connexions. MPLS-TE permet ainsi d'obtenir un mode connecté dans les réseaux de type IP, permettant d'optimiser l'utilisation des ressources et de maximiser la charge de trafic pouvant circuler sur le réseau tout en préservant la qualité de service. Ainsi, un réseau de communication MPLS, supportant le protocole RSVP-TE, est un réseau de transport de paquets en mode connecté. Le protocole RSVP-TE, dans son extension définie dans la RFC 4875, permet en outre d'établir des tunnels MPLS-TE point-à-multipoint, appelé P2MP, entre un routeur source, encore appelé routeur "racine", et une pluralité de routeurs de destination, encore appelés routeurs d'extrémité, pour le transport de trafic entre le routeur racine et la pluralité de routeurs d'extrémité.

On assiste à l'émergence d'applications dites multipoint-à-multipoint, ou MP2MP, pour lesquels les routeurs d'extrémité sont à la fois émetteurs et récepteurs. On peut citer par exemple, le document de travail de l'IETF intitulé « Label Distribution Protocol Extensions for Half-Duplex Multipoint-to-Multipoint Label Switched Paths » draft-brockners-ldp-half-duplex-mp2mp-01.txt décrit une organisation multipoint à multipoint dans un réseau MPLS. Certaines de ces applications ont de fortes contraintes de bande passante, de qualité de service et de disponibilité, comme par exemple des applications de type visioconférence multipoint. Actuellement, le support d'une communication MPLS-TE MP2MP entre N routeurs d'extrémité nécessite d'établir N tunnels MPLS-TE P2MP. Lorsque le nombre de noeuds d'extrémité augmente, il devient très difficile de mettre en oeuvre une telle solution. En effet, la consommation en termes de mémoire et de CPU requise devient supérieure aux capacités actuelles des noeuds d'acheminement.

Un des buts de l'invention est de remédier à des insuffisances/inconvénients de l'état de la technique et/ou d'y apporter des améliorations.

L'invention a pour objet un procédé pour faire communiquer entre eux une pluralité de noeuds d'extrémité à travers un arbre établi dans un réseau de communication, ledit réseau comprenant des moyens agencés pour obtenir une organisation de noeuds d'acheminement du réseau suivant un arbre, l'arbre comprenant un noeud initiateur de l'arbre, dit noeud racine, et des branches reliant les noeuds deux à deux, à partir du noeud racine jusqu'aux noeuds d'extrémité,
une branche étant dite aval si elle descend dans l'arborescence vers au moins un des noeuds d'extrémité et une branche étant dite amont si elle remonte dans l'arborescence vers le noeud racine,
ledit procédé comprenant les étapes suivantes, mises en oeuvre par un noeud d'acheminement :
pour un noeud jouant le rôle du noeud racine dans l'arborescence :
   a1- une étape de réception d'une demande d'établissement de l'arbre et une liste desdits noeuds d'extrémité, leurs bandes passantes requises respectives et un ensemble de routes dans lequel une route comprend une liste de noeuds permettant de joindre un des noeuds d'extrémité, sur lesquelles les branches dudit arbre s'appuient,
et pour un noeud ne jouant pas le rôle du noeud racine dans l'arborescence :
   a2- une étape de réception d'une demande d'ouverture de connexion bidirectionnelle avec réservation de ressources en provenance d'un autre noeud d'acheminement à travers une branche amont, ladite demande comprenant une bande passante requise pour un flot provenant dudit autre noeud, dit flot descendant, un ensemble de routes et les bandes passantes requises respectivement par les noeuds d'extrémité pour leur flot montant respectif ;
   b- une étape de détermination d'un ensemble de branches, comprenant les branches aval issues dudit noeud d'acheminement et permettant de joindre un ou des noeuds d'extrémité raccordés à l'arbre au travers desdites branches aval, à partir de l'ensemble de routes reçu ;
   c- une étape de détermination, pour une première branche aval dudit ensemble de branches déterminé, d'une bande passante requise pour un flot descendant, en fonction de la bande passante requise pour le flot descendant à travers la branche amont reçue lorsque le noeud ne joue pas le rôle du noeud racine dans l'arborescence, et de celle requise pour au moins un flot provenant d'un des noeuds d'extrémité à travers au moins une deuxième branche aval dudit ensemble de branches déterminé ; et
   d- une étape d'envoi d'une nouvelle demande d'ouverture de connexion bidirectionnelle avec réservation de ressources, comprenant la bande passante déterminée, à un noeud de la première branche aval, voisin du noeud d'acheminement,
les étapes c et d étant, le cas échéant, réitérées pour l'ensemble des branches aval à traiter,
la connexion bidirectionnelle avec réservation de ressources sur une branche aval étant établie sur réception en provenance d'un noeud d'acheminement voisin situé à l'autre extrémité de ladite branche aval d'une confirmation de connexion.

Afin de faire communiquer entre eux une pluralité de noeuds d'extrémité, un arbre comprenant un noeud, jouant le rôle d'un noeud racine dans l'arborescence, et des branches reliant les noeuds deux à deux, à partir du noeud racine jusqu'aux noeuds d'extrémité, est déterminé. Une branche reliant des noeuds deux à deux correspond à un lien du réseau. Il s'agit ensuite d'établir l'arbre dans le réseau de communication en effectuant des réservations de ressources adaptées. A cet effet, une connexion s'appuyant sur les différentes branches de l'arbre est ouverte en adaptant, pour chacune des branches, la capacité en bande passante requise sur cette branche. En déterminant la capacité en bande passante requise sur une branche aval pour un flot descendant, le noeud d'acheminement ajuste celle-ci en fonction de la bande passante requise pour les différents flots qui vont entrer sur le noeud d'acheminement, c'est-à-dire : un flot descendant sur la branche amont, par laquelle une demande d'ouverture de connexion bidirectionnelle avec réservation de ressources initiale a été reçue, et les flots provenant des noeuds d'extrémité montants à travers les autres branches aval reliées au noeud. Cette méthode de détermination permet de prendre en compte les flots de données qui vont être générés par des noeuds d'extrémité à travers les autres branches aval. Une seule connexion, s'appuyant sur les différentes branches de l'arbre, est créée. Ceci permet d'optimiser l'utilisation des ressources du réseau et de faciliter la gestion au niveau des noeuds d'acheminement des connexions. Une seule connexion est créée au lieu d'un nombre de l'ordre de celui des noeuds d'extrémité avec les méthodes connues de l'état de la technique. Les demandes d'ouverture de connexion bidirectionnelle sont ainsi relayées de proche en proche afin d'ouvrir la connexion sur les différentes branches, permettant ainsi de créer l'arbre dans le réseau.

Ainsi le procédé selon l'invention permet de faire communiquer entre eux une pluralité de noeuds d'extrémité à travers un réseau de communication.

En outre, le procédé comprend :
e- une étape de détermination, pour ladite première branche aval reliée audit noeud d'acheminement, d'une bande passante requise pour un flot montant, en fonction d'une bande passante requise à travers ladite première branche aval pour un flot provenant d'au moins un noeud d'extrémité,
la nouvelle demande d'ouverture de connexion bidirectionnelle transmise à l'étape d comprenant ladite bande passante requise pour le flot montant déterminée pour ladite première branche aval et les étapes c, d et e étant, le cas échéant, réitérées pour l'ensemble des branches aval reliées audit noeud d'acheminement.

Pour chaque branche aval, le noeud d'acheminement va déterminer la capacité en bande passante requise pour un flot montant à travers cette branche. Ce flot montant est constitué de l'ensemble des flots émis par un ou des noeuds d'extrémité raccordés à l'arbre à travers cette branche. Ainsi, la capacité en bande passante requise pour le flot montant sur une branche est adaptée aux capacités en bande passante requises respectives des noeuds d'extrémité. Ceci permet encore d'améliorer l'utilisation des ressources du réseau.

De plus, le procédé comprend en outre l'étape suivante mise en oeuvre par un noeud d'extrémité recevant une demande d'ouverture de connexion bidirectionnelle, - une étape de réservation de ressources, dans laquelle le noeud d'extrémité réserve la bande passante requise pour le flot montant et transmet une confirmation de connexion, comprenant la bande passante requise pour le flot descendant reçue dans ladite demande.

Une demande d'ouverture de connexion, émise par un noeud d'acheminement, atteint un noeud d'extrémité. Celui-ci va alors réserver effectivement la bande passante requise pour le flot montant et envoyer une confirmation de connexion. Cette dernière comprend la bande passante requise pour le flot descendant, reçue dans la demande d'ouverture de connexion. Ainsi, le noeud d'acheminement, qui a transmis la demande d'ouverture de connexion, va réserver la bande passante requise pour le flot descendant uniquement lorsque le noeud d'extrémité raccordé à l'arbre sur cette branche a lui-même mis en oeuvre la réservation de ressources. Le noeud d'acheminement réserve également la bande passante requise pour le flot montant sur la branche amont, en fonction de la valeur indiquée dans la demande d'ouverture de connexion émise par le noeud situé en amont.

En outre, le procédé comprend en outre une étape d'initialisation, dans laquelle le noeud racine transmet une demande d'ouverture de connexion bidirectionnelle sur la pluralité de branches permettant d'atteindre la pluralité de noeuds d'extrémité.

Un seul noeud, le noeud racine, est responsable de l'établissement de l'arbre dans le réseau. Par rapport à la technique antérieure connue, ceci permet de centraliser et de coordonner la mise en place de la connexion s'appuyant sur les branches de l'arbre.

Dans un premier mode de réalisation, les noeuds d'extrémité étant susceptibles de communiquer simultanément, une bande passante requise pour un flot descendant, pour une première branche aval issue dudit noeud d'acheminement, est déterminée en fonction de la somme des bandes passantes requises respectives pour des flots susceptibles d'être acheminés à travers ladite branche.

Les noeuds étant susceptibles de communiquer simultanément, pour le sens descendant, les flots susceptibles d'être acheminés à travers une branche correspondent au flot descendant arrivant de la branche amont et à l'ensemble des flots montants émis par des noeuds d'extrémité à travers d'autres branches. Pour le sens montant, il s'agit de l'ensemble des flots montants émis par des noeuds d'extrémité à travers la branche. On réserve ensuite les ressources en fonction de la somme des flots susceptibles d'être acheminés. Ainsi, les ressources effectivement réservées vont correspondre à ce qui est nécessaire pour faire communiquer entre eux les noeuds d'extrémité.

Dans un deuxième mode de réalisation, les noeuds étant susceptibles de communiquer alternativement, une bande passante requise pour un flot descendant, pour une première branche aval issue dudit noeud d'acheminement, est déterminée en fonction du maximum parmi les bandes passantes requises respectives pour des flots susceptibles d'être acheminés à travers ladite branche.

Contrairement au premier mode, dans le deuxième mode, dans lequel les noeuds d'extrémité sont susceptibles de communiquer alternativement, on réserve les ressources en fonction de la valeur maximale des bandes passantes requises pour les flots susceptibles d'être acheminés à travers la branche. Ainsi, les ressources effectivement réservées vont correspondre à ce qui est nécessaire pour faire communiquer entre eux les noeuds d'extrémité, c'est-à-dire la valeur maximale.

En outre, le procédé comprend une étape de mise à jour de la connexion, sur réception d'une demande d'ouverture de connexion bidirectionnelle relative à une connexion existante.

Le procédé est adapté à l'ajout d'un noeud d'extrémité par mise à jour de l'arbre. Par rapport aux techniques connues de l'art antérieur, ceci est réalisé de façon simple et n'impacte qu'une seule arborescence.
L'invention concerne également un noeud d'un réseau de communication, appartenant à un arbre comprenant un noeud initiateur de l'arbre, dit noeud racine, et des branches reliant des noeuds deux à deux, à partir du noeud racine jusqu'à des noeuds d'extrémité, ledit arbre étant prévu pour faire communiquer entre eux les noeuds d'extrémité,
une branche étant dite aval si elle descend dans l'arborescence vers au moins un des noeuds d'extrémité et une branche étant dite amont si elle remonte dans l'arborescence vers le noeud racine,
ledit noeud comprenant :
- des moyens de réception, agencés pour recevoir une demande d'établissement de l'arbre et une liste desdits noeuds d'extrémité, leurs bandes passantes requises respectives et un ensemble de routes dans lequel une route comprend une liste de noeuds permettant de joindre un des noeuds d'extrémité, sur lesquelles les branches dudit arbre s'appuient, lorsque le noeud joue le rôle du noeud racine dans l'arborescence, ou pour recevoir une demande d'ouverture de connexion bidirectionnelle avec réservation de ressources en provenance d'un autre noeud d'acheminement à travers une branche amont, ladite demande comprenant une bande passante requise pour un flot provenant dudit autre noeud, dit flot descendant, un ensemble de routes, et les bandes passantes requises respectivement par les noeuds d'extrémité pour leurs flots montants respectifs, lorsque le noeud ne joue pas le rôle du noeud racine dans l'arborescence ;
- des moyens de détermination d'une bande passante requise pour un flot descendant, agencés pour déterminer, pour une première branche aval dudit ensemble de branches déterminé, une bande passante requise pour un flot descendant, en fonction d'une bande passante requise pour le flot descendant à travers la branche amont reçue lorsque le noeud ne joue pas le rôle du noeud racine dans l'arborescence, et de celle requise pour au moins un flot provenant d'un des noeuds d'extrémité à travers au moins une deuxième branche aval reliée audit noeud ;
- des moyens d'envoi d'une nouvelle demande d'ouverture de connexion bidirectionnelle avec réservation de ressources, comprenant la bande passante déterminée pour une première branche aval reliée audit noeud, à un noeud de ladite première branche, voisin du noeud ;
- des moyens de commande, agencés pour déterminer un ensemble de branches, comprenant les branches aval issues dudit noeud et permettant de joindre un ou des noeuds d'extrémité raccordés à travers l'arbre au travers desdites branches, à partir de l'ensemble de routes reçues et pour commander pour l'ensemble des branches aval déterminé les moyens de détermination et les moyens d'envoi, le cas échéant ;
- des moyens de réception en provenance d'un noeud d'acheminement voisin situé à l'autre extrémité d'une branche aval d'une confirmation de connexion, la connexion bidirectionnelle avec réservation de ressources sur une branche aval étant alors établie.

L'invention concerne en outre un système de communication, comprenant des noeuds tels que décrits précédemment, organisés suivant un arbre comprenant un noeud racine et des branches reliant les noeuds deux à deux, à partir du noeud racine jusqu'à des noeuds d'extrémité, ledit arbre étant prévu pour faire communiquer entre eux les noeuds d'extrémité, dans lequel le noeud racine comprend en outre des moyens de transmission, agencés pour transmettre une demande d'ouverture de connexion bidirectionnelle initiale sur la pluralité de branches permettant d'atteindre la pluralité de noeuds d'extrémité.

L'invention concerne également :
- un programme pour noeud d'un réseau de communication, pour faire communiquer entre eux une pluralité de noeuds d'extrémité, comprenant des instructions de programme destinées à commander l'exécution de celles des étapes du procédé précédemment décrit qui sont exécutées par ledit noeud, lorsque ledit programme est exécuté par celui-ci ;
- un support d'enregistrement lisible par un noeud d'un réseau de communication sur lequel est enregistré le programme pour noeud d'un réseau de communication.

L'invention sera mieux comprise à l'aide de la description suivante d'un mode de réalisation particulier du procédé de l'invention, en référence aux dessins annexés sur lesquels :
- la figure 1 représente un arbre dans un réseau de communication ;
- la figure 2 représente l'arbre lors d'une procédure d'ajout d'un noeud d'extrémité ;
- la figure 3 représente les étapes du procédé selon un mode particulier de réalisation de l'invention ;
- la figure 4 représente un dispositif selon un mode particulier de réalisation de l'invention ;
- la figure 5 représente un message de demande d'ouverture de connexion bidirectionnelle ;
- la figure 6 représente un message de confirmation de réservation.

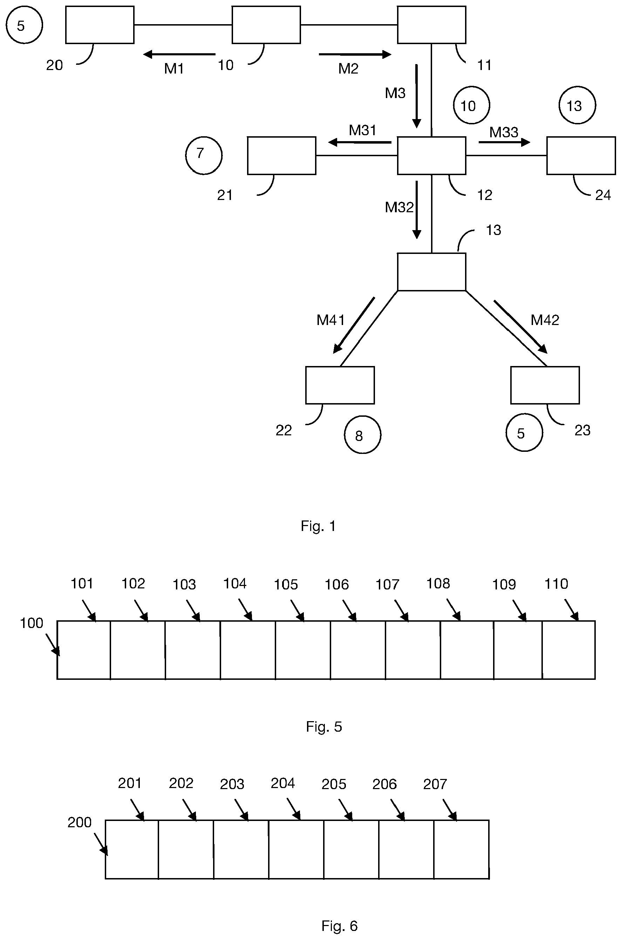

Sur la figure 1, on a représenté de façon schématique un réseau de communication. Ce réseau comprend des noeuds d'acheminement 10, 11, 12, 13 et des noeuds d'extrémité 20, 21, 22, 23, 24, raccordés aux noeuds d'acheminement. Les noeuds d'extrémité 22 et 23 sont raccordés au noeud d'acheminement 13. Les noeuds d'extrémité 21 et 24 sont raccordés au noeud d'acheminement 12. Le réseau comprend également d'autres noeuds d'acheminement, non représentés sur la figure 1. En effet, seuls les noeuds jouant un rôle lors de l'établissement de l'arborescence sont représentés. Sur la figure 1, sont également indiquées entourées par un cercle les bandes passantes requises respectives des noeuds d'extrémité. Les bandes passantes requises des noeuds d'extrémité 20, 21, 22, 23, 24 sont respectivement de cinq, sept, huit, cinq et treize Mbits/s. Par ailleurs, le noeud d'acheminement 12 est également un noeud d'extrémité, de bande passante requise de dix Mbits/s.

La fonction de placement de tunnel ne fait pas partie de la présente invention. Cette fonction repose sur un algorithme de routage par contrainte prenant en entrée la topologie ainsi que les ressources disponibles, les contraintes du tunnel et renvoyant un chemin contraint s'il existe. Cette fonction fournit l'arborescence du tunnel, notamment un noeud, jouant le rôle du noeud racine, c'est-à-dire le noeud initiateur de l'arborescence, des routes explicites permettant de joindre les noeuds d'extrémité. Elle peut être exécutée soit par un noeud d'acheminement, soit par un serveur externe.

Les noeuds d'acheminement sont organisés suivant un arbre. Par "organisés", on comprendra qu'il ne s'agit pas d'un agencement statique des noeuds mais que pour définir un arbre donné, on organise de façon particulière les noeuds d'acheminement. L'arbre comprend un noeud racine et des branches reliant les noeuds deux à deux, à partir du noeud racine jusqu'aux noeuds d'extrémité. A titre d'exemple, une arborescence à établir est représentée sur la figure 1. Le noeud 10 joue le rôle de noeud racine. Deux branches aval sont issues du noeud racine 10 : une première branche aval vers le noeud d'extrémité 20 et une deuxième vers le noeud d'acheminement 11. Une seule branche aval est issue du noeud d'acheminement 11 vers le noeud d'acheminement 12.

Du noeud 12 sont issues trois branches aval : une première vers le noeud d'extrémité 21, une deuxième vers le noeud d'extrémité 24 et une troisième vers le noeud d'acheminement 13.

Du noeud 13 sont issues deux branches aval : une première vers le noeud d'extrémité 22 et une deuxième vers le noeud d'extrémité 23.

On comprendra que la dénomination "branche aval" correspond à une branche qui descend dans l'arborescence et la dénomination "branche amont" correspond à une branche qui remonte vers le noeud racine dans l'arborescence.

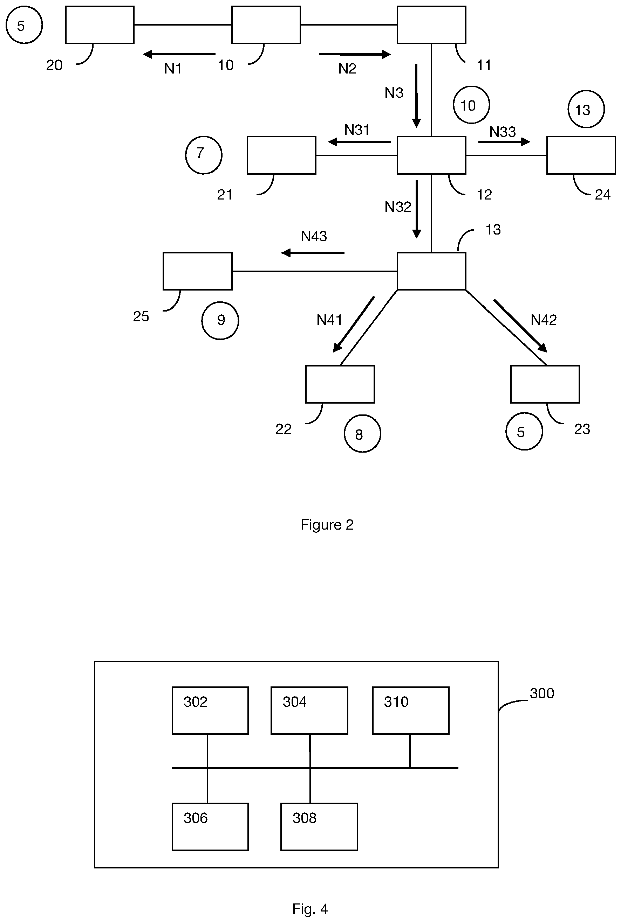

Sur la figure 2, les noeuds déjà présents dans l'arborescence de la figure 1 sont toujours présents. Une nouvelle branche aval issue du noeud 13 doit être créée dans l'arborescence, afin d'y ajouter un noeud d'extrémité 25 de bande passante requise de neuf Mbits/s.

Sur la figure 5, on a représenté un message 100 de demande d'ouverture de connexion. Par exemple, dans le protocole RSVP-TE, il s'agit d'un message "Path".

Un tel message 100 comprend :
- un identifiant du tunnel 101 ;
- un identifiant du chemin à commutation d'étiquettes 102 ;
- l'adresse 103 du noeud racine dans le réseau de communication ;
- une liste 104 d'adresses de noeuds comprenant les adresses respectives d'un ou de plusieurs noeuds d'extrémité ;
- une liste 105 de bandes passantes comprenant les bandes passantes requises respectives du ou des noeuds de la liste 104 de noeuds ;
- une liste 106 de routes explicites du chemin à commutation d'étiquettes à destination des différents noeuds d'extrémité ;
- une bande passante requise 107 pour le sens descendant, c'est-à-dire du noeud racine vers les noeuds d'extrémité ;
- une bande passante requise 108 pour le sens montant, c'est-à-dire des noeuds d'extrémité vers le noeud racine ;
- un champ 109 indiquant simultané ou alternatif,
- une étiquette 110 allouée localement par le noeud émetteur du message pour le chemin à commutation d'étiquettes dans le sens montant.

Sur la figure 6, on a représenté un message 200 de confirmation de connexion. Par exemple, dans le protocole RSVP-TE, il s'agit d'un message "Resv".

Un tel message 200 comprend :
- un identifiant du tunnel 201 ;
- un identifiant du chemin à commutation d'étiquettes 202 ;
- l'adresse 203 du noeud racine dans le réseau de communication ;
- une liste 204 d'adresses de noeuds comprenant les adresses respectives d'un ou de plusieurs noeuds d'extrémité ;
- une bande passante requise 205 pour le sens descendant, c'est-à-dire du noeud racine vers les noeuds d'extrémité ;
- une bande passante réservée 206 pour le sens montant, c'est-à-dire des noeuds d'extrémité vers le noeud racine ;
- une étiquette 207 allouée localement par le noeud émetteur du message pour le chemin à commutation d'étiquettes dans le sens descendant.

On rappelle que, de façon classique, l'établissement d'un tunnel point à point entre un noeud racine et un noeud d'extrémité est effectué de la façon suivante selon le protocole RSVP-TE. Un message de demande d'ouverture de connexion "Path" est tout d'abord envoyé par le noeud racine vers le noeud d'extrémité, relayé de proche en proche le long de la route explicite par les noeuds d'acheminement intermédiaires. À la réception du message "Path", chaque routeur intermédiaire instancie un nouvel état RSVP et enregistre les informations reçues dans le message. Il détermine ensuite sur la base de la route explicite le prochain lien à emprunter. Il réalise également un contrôle d'admission local pour vérifier que le prochain lien respecte bien les contraintes TE du LSP, en particulier la bande passante, puis met à jour la route explicite en y enlevant sa propre adresse et transmet le message vers le noeud d'acheminement en aval. Lorsque le message "Path" arrive au noeud d'extrémité, celui-ci instancie un état RSVP et lance la procédure de réservation. Le message de confirmation de connexion "Resv" est envoyé par le noeud d'extrémité vers le noeud racine en réponse à un message "Path". Le message "Resv" transite de proche en proche le long du chemin explicite créé par le message "Path". L'adresse d'extrémité d'un message "Resv" est l'adresse du noeud précédent enregistré dans l'état RSVP. Le message "Resv" distribue les étiquettes en amont et déclenche la réservation de ressources.

Sur réception du message "Resv", un noeud d'acheminement met à jour la bande passante résiduelle disponible. Elle est diminuée de la bande passante réservée. Il alloue ensuite une étiquette au chemin à commutation d'étiquettes et ajoute l'entrée correspondante dans sa table de commutation MPLS. Il transmet ensuite le message "Resv" au noeud d'acheminement prédécesseur, mémorisé dans l'état RSVP. Lorsque le message "Resv" arrive au noeud racine, celui-ci effectue une réservation de ressource et met à jour sa table de routage IP en y incluant le LSP. L'établissement du LSP est alors achevé.

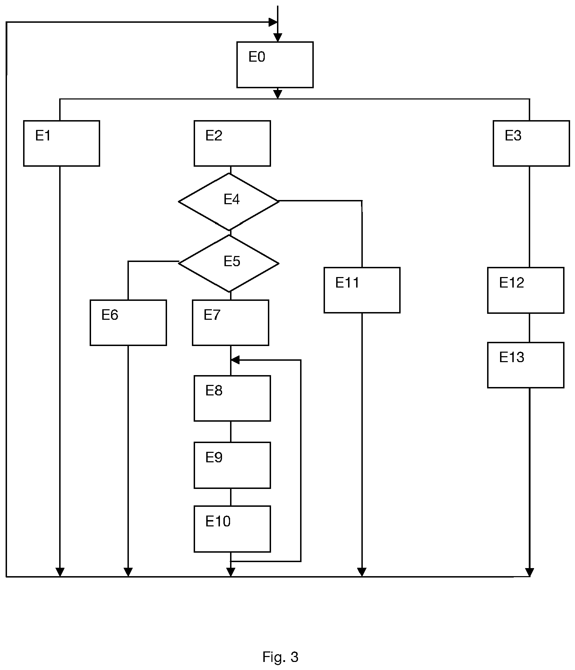

Le procédé pour faire communiquer entre eux une pluralité de noeuds d'extrémité à travers un réseau de communication va maintenant être décrit en relation avec la figure 3.

Dans une étape E0 d'attente, un noeud attend de recevoir un message.

Dans une étape E1 d'initialisation, un noeud d'acheminement ou d'extrémité reçoit une demande d'établissement de l'arbre. Il joue alors le rôle du noeud racine dans l'arborescence. Il reçoit l'ensemble des informations nécessaires à l'établissement de l'arbre, notamment la liste des noeuds d'extrémité, leurs bandes passantes requises respectives, les routes explicites sur lesquelles les branches de l'arbre s'appuient.

A partir des routes explicites, le noeud racine 10 détermine les branches sur lesquelles une réservation de ressources doit être effectuée.

Pour chaque branche aval ainsi déterminée, le noeud racine 10 transmet une demande d'ouverture de connexion bidirectionnelle 100 avec réservation de ressources. Pour une branche donnée, cette demande 100 comprend notamment une bande passante requise pour le sens descendant 107 ainsi qu'une bande passante requise pour le sens montant 108. Ces valeurs peuvent être déterminées par le noeud racine 10 de façon analogue au traitement qui va être décrit ensuite pour un noeud recevant une demande d'ouverture de connexion bidirectionnelle avec réservation de ressources. Cette demande d'ouverture de connexion bidirectionnelle 100 avec réservation de ressources comprend également une liste 104 d'adresses de noeuds comprenant les adresses respectives d'un ou de plusieurs noeuds d'extrémité à connecter à travers une branche aval issue du noeud racine et une liste 105 de bandes passantes comprenant les bandes passantes requises respectives du ou des noeuds de la liste 104 de noeuds ainsi qu'une liste 106 de routes explicites du chemin à commutation d'étiquettes à destination des différents noeuds d'extrémité. Le procédé repasse ensuite à l'étape E0 de réception d'un message.

Dans une étape E2, un noeud reçoit une demande d'ouverture de connexion bidirectionnelle avec réservation de ressources à travers une branche amont.

Dans une étape E4 de test, le noeud vérifie si le tunnel identifié dans le champ 101 du message 100 est déjà établi.

Si le tunnel n'est pas établi, dans une étape E5, on vérifie si le noeud est un noeud d'acheminement ou si le noeud est un noeud d'extrémité.

Si le noeud ayant reçu le message est un noeud d'extrémité, dans une étape E6, le noeud réserve les ressources pour le sens montant en fonction de la valeur reçue dans le champ 108 relatif à la bande passante requise pour le sens montant et transmet un message de confirmation de connexion 200, comprenant une bande passante requise pour le flot descendant 205, égale à celle reçue dans le message de demande d'ouverture de connexion bidirectionnelle. Le procédé repasse ensuite à l'étape E0 d'attente de réception d'un message.

Si le noeud ayant reçu le message est un noeud d'acheminement, dans une étape E7, il détermine à partir de la liste 106 de routes explicites du chemin à commutation d'étiquettes à destination des différents noeuds d'extrémité l'ensemble des branches aval à traiter. Dans le cas particulier où le noeud d'acheminement est également un noeud d'extrémité, on considère qu'il s'agit d'une branche aval particulière, qui fait l'objet des étapes décrites ci-après au même titre que les autres branches aval.

Pour une branche aval donnée, il détermine alors, dans une étape de détermination E8, une bande passante requise pour le flot montant, en fonction de la bande passante requise à travers cette branche aval pour un flot montant provenant d'au moins un noeud d'extrémité. Puis, pour cette même branche aval donnée, il détermine dans une étape de détermination E9, une bande passante requise pour le flot descendant, en fonction de la valeur de la bande passante requise pour le flot descendant 107 à travers la branche amont, reçue dans le message 100 de demande d'ouverture de connexion et de celle requise à travers au moins une autre branche aval issue du noeud d'acheminement pour un flot montant provenant d'au moins un noeud d'extrémité. Une fois, ces deux bandes passantes déterminées, il envoie dans une étape d'envoi E10 une nouvelle demande d'ouverture de connexion bidirectionnelle avec réservation de ressources, comprenant la bande passante requise pour le flot descendant déterminée, la bande passante requise pour le flot montant déterminée ainsi qu'une liste 104 d'adresses de noeuds comprenant les adresses respectives du ou des noeuds d'extrémité à connecter à travers la branche aval et une liste 105 de bandes passantes comprenant les bandes passantes requises respectives du ou des noeuds de la liste 104 de noeuds, au noeud de la branche aval donnée, voisin du noeud d'acheminement. Il s'agit du noeud d'acheminement situé à l'autre extrémité de la branche aval donnée.

Les étapes E8, E9 et E10 sont, le cas échéant, réitérées pour l'ensemble des branches aval issues du noeud d'acheminement.

Le message 100 de demande d'ouverture de connexion bidirectionnelle avec réservation de ressources comprend un champ 109 indiquant "simultané" ou "alternatif".

Dans un premier mode de réalisation, si le champ 109 indique "simultané", c'est-à-dire si les noeuds d'extrémité sont susceptibles de communiquer simultanément, une bande passante requise, pour une branche aval issue du noeud d'acheminement, est déterminée en fonction de la somme des bandes passantes requises respectives pour des flots susceptibles d'être acheminés à travers cette branche. On prévoit ainsi la réservation de bande passante pour l'ensemble des flots susceptibles d'être acheminés à travers cette branche. L'arbre est ainsi correctement dimensionné pour un tel cas.

Dans un deuxième mode de réalisation, si le champ 109 indique "alternatif", c'est-à-dire si les noeuds sont susceptibles de communiquer alternativement, une bande passante requise, pour une branche aval issue du noeud d'acheminement, est déterminée en fonction du maximum parmi les bandes passantes requises respectives pour des flots susceptibles d'être acheminés à travers cette branche. L'arbre est ainsi dimensionné au plus juste et il n'y a pas de ressources réservées inutilement.

Le procédé repasse ensuite à l'étape E0 d'attente de réception d'un message.

Si, on détermine lors de l'étape E4 que le tunnel identifié dans le champ 101 du message 100 de demande d'ouverture de connexion est déjà établi, on met alors en oeuvre une étape de mise à jour E11 du tunnel.

Pour chaque branche aval déjà existante, le noeud détermine si les bandes passantes requises doivent être mises à jour et envoie une nouvelle demande d'ouverture de connexion bidirectionnelle avec réservation de ressources, comprenant la bande passante requise pour le flot descendant déterminée et la bande passante requise pour le flot montant déterminée, au noeud aval, voisin du noeud d'acheminement.

Pour une nouvelle branche aval, liée par exemple à l'adjonction à l'arbre d'un nouveau noeud d'extrémité, le noeud détermine les bandes passantes requises pour les sens montant et descendant pour cette nouvelle branche, de façon analogue à ce qui est décrit aux étapes E8 et E9, et envoie une nouvelle demande d'ouverture de connexion bidirectionnelle avec réservation de ressources, comprenant la bande passante requise pour le flot descendant déterminée et la bande passante requise pour le flot montant déterminée, au noeud aval, voisin du noeud d'acheminement.

Le procédé repasse ensuite à l'étape E0 d'attente de réception d'un message.

Dans une étape E3, le noeud reçoit un message de confirmation de connexion en provenance du noeud situé à l'autre extrémité de la branche, comprenant une bande passante réservée 206 pour le sens montant et une bande passante requise 205 pour le sens descendant. Il attend, le cas échéant, la réception d'autres messages de confirmation de connexion sur d'autres branches aval. Dans une étape E12, il réserve la bande passante requise sur le sens montant de la branche amont puis il transmet au noeud d'acheminement qui lui avait transmis la demande d'ouverture de connexion bidirectionnelle avec réservation de ressources un message de confirmation de connexion, comprenant la valeur de la bande passante réservée pour le sens montant et la valeur de la bande passante requise pour le sens descendant. Dans une étape E13, il réserve effectivement la bande passante requise pour le sens descendant pour la branche aval.

Le procédé repasse ensuite à l'étape E0 d'attente de réception d'un message.

Des exemples illustratifs de ces différentes étapes sont donnés en relation avec les figures 1 et 2.

Dans la suite, un message de demande d'ouverture de connexion est indiqué comme comprenant deux paramètres sous la forme Mx(bande passante requise pour le sens descendant, bande passante requise pour le sens montant) ou Nx(,).

On se place d'abord dans le premier mode de réalisation où les noeuds d'extrémité sont susceptibles de communiquer simultanément.

Afin d'établir l'arborescence, telle qu'illustrée sur la figure 1, le noeud racine 10 transmet deux messages de demande d'ouverture de connexion :
- le premier M1(43, 5), transmis au noeud d'extrémité 20, sur la branche aval à travers laquelle le noeud d'extrémité 20 est connecté à l'arbre. La bande passante requise le sens montant correspond à celle de ce noeud, soit de cinq Mbits/s. La bande passante requise pour le sens descendant correspond à la somme de l'ensemble des bandes passantes requises respectives des noeuds d'extrémité 21 à 24 et le noeud d'acheminement 12 en tant que noeud d'extrémité, soit 43 Mbits/s.
- le deuxième M2(5, 43), transmis au noeud d'acheminement 11, sur la branche aval à travers laquelle les flots des noeuds d'extrémité 21 à 24 et le noeud d'acheminement 12 en tant que noeud d'extrémité sont acheminés.

Sur réception du message M2(5, 43), le noeud d'acheminement 11 détermine que les bandes passantes ne doivent pas être modifiées et transmet le message M3(5,43) au noeud d'acheminement 12.

Sur réception du message M3(5,43), le noeud d'acheminement 12 détermine pour chaque branche aval lors des étapes E8 et E9, les bandes passantes requises pour les flots montant et descendant.

A titre d'exemple, pour la branche vers le noeud d'extrémité 21, la bande passante pour le sens montant correspond à celle requise pour ce noeud d'extrémité, soit 7 Mbits/s. Pour le sens descendant, elle correspond à la somme de la bande passante requise pour la branche amont (vers le noeud 11) et de celles des autres branches aval issues du noeud (vers le noeud d'acheminement 13, vers le noeud d'extrémité 24 et lui-même en tant que noeud d'extrémité), soit 5+13+13+10. Le noeud transmet donc lors de l'étape E10 le message M31(41,7) au noeud d'extrémité 21.

De même, il détermine lors des étapes E8 et E9 les bandes passantes requises et transmet lors de l'étape E10 le message M32(35,13), respectivement M33(35,13), au noeud d'acheminement 13, respectivement au noeud d'extrémité 24.

Le noeud d'acheminement 13 transmet ensuite M41(40,8), respectivement M42(43,5), au noeud d'extrémité 22, respectivement 23.

On voit qu'ainsi l'arbre est en cours d'établissement dans le réseau, la demande d'ouverture de connexion se propageant de proche en proche. De même, les confirmations de connexion, non représentées sur la figure 1, se propagent de proche en proche, à partir des noeuds d'extrémité vers le noeud racine 10.

Ultérieurement, lorsque le noeud d'extrémité 25, de bande passante requise de 9 Mbits/s, doit être ajouté à l'arbre, l'adjonction de ce noeud d'extrémité est réalisée selon le procédé comme illustré sur la figure 2.

Le noeud racine 10 transmet deux messages de demande d'ouverture de connexion :
- le premier N1(52, 5), transmis au noeud d'extrémité 20, sur la branche aval à travers laquelle le noeud d'extrémité 20 est connecté à l'arbre. La bande passante requise pour le sens montant correspond à celle de ce noeud, soit de cinq Mbits/s. La bande passante requise pour le sens descendant correspond à la somme de l'ensemble des bandes passantes requises respectives des noeuds d'extrémité 21 à 25 et le noeud d'acheminement 12 en tant que noeud d'extrémité, soit 52 Mbits/s.
- le deuxième N2(5, 52), transmis au noeud d'acheminement 11, sur la branche aval à travers laquelle les flots des noeuds d'extrémité 21 à 25 et le noeud d'acheminement 12 en tant que noeud d'extrémité sont acheminés.

Sur réception du message N2(5, 52), le noeud d'acheminement 11 détermine que les bandes passantes ne doivent pas être modifiées et transmet le message N3(5,52) au noeud d'acheminement 12.

Sur réception du message N3(5,52), le noeud d'acheminement 12 détermine pour chaque branche aval lors de l'étape E11, les bandes passantes requises pour les flots montant et descendant.

A titre d'exemple, pour la branche vers le noeud d'extrémité 21, la bande passante pour le sens montant correspond à celle requise pour ce noeud d'extrémité, soit 7 Mbits/s. Pour le sens descendant, elle correspond à la somme de la bande passante requise pour la branche amont (vers le noeud 11) et de celles des autres branches aval issues du noeud (vers le noeud d'acheminement 13, le noeud d'extrémité 24 et lui-même en tant que noeud d'extrémité), soit 5+22+13+10. Le noeud transmet donc le message N31 (50,7) au noeud d'extrémité 21.

De même, il détermine lors de l'étape E11 les bandes passantes requises et transmet le message N32(35,22), respectivement N33(44,13), au noeud d'acheminement 13, respectivement au noeud d'extrémité 24.

Le noeud d'acheminement 13 transmet ensuite N41 (49,8), respectivement N42(52,5), au noeud d'extrémité 22, respectivement 23. Pour la branche aval vers le noeud d'extrémité 25, le noeud d'acheminement 13 transmet le message N43(48,9) à ce dernier.

Dans le deuxième mode de réalisation, les noeuds d'extrémité ne sont pas susceptibles de communiquer simultanément.

Le noeud racine 10 transmet deux messages de demande d'ouverture de connexion :
- le premier M1(13, 5), transmis au noeud d'extrémité 20, sur la branche aval à travers laquelle le noeud d'extrémité 20 est connecté à l'arbre. La bande passante requise le sens montant correspond à celle de ce noeud, soit de cinq Mbits/s. La bande passante requise pour le sens descendant correspond à la plus grande valeur prise dans l'ensemble des bandes passantes requises respectives des noeuds d'extrémité 21 à 24 et le noeud d'acheminement 12 en tant que noeud d'extrémité, c'est-à-dire max {7,8,5,13,10}, soit 13 Mbits/s.
- le deuxième M2(5, 13), transmis au noeud d'acheminement 11, sur la branche aval à travers laquelle les flots des noeuds d'extrémité 21 à 24 et le noeud d'acheminement 12 en tant que noeud d'extrémité sont acheminés.

Sur réception du message M2(5, 13), le noeud d'acheminement 11 détermine que les bandes passantes ne doivent pas être modifiées et transmet le message M3(5,13) au noeud d'acheminement 12.

Sur réception du message M3(5,13), le noeud d'acheminement 12 détermine pour chaque branche aval lors des étapes E8 et E9, les bandes passantes requises pour les flots montant et descendant.

A titre d'exemple, pour la branche vers le noeud d'extrémité 21, la bande passante pour le sens montant correspond à celle requise pour ce noeud d'extrémité, soit 7 Mbits/s. Pour le sens descendant, elle correspond à la plus grande valeur prise dans l'ensemble constitué de la bande passante requise pour la branche amont (vers le noeud 11) et de celles des autres branches aval issues du noeud (vers le noeud d'acheminement 13, vers le noeud d'extrémité 24 et lui-même en tant que noeud d'extrémité), c'est-à-dire max{5,8,5,13,10} soit 13 Mbits/s. Le noeud transmet donc lors de l'étape E10 le message M31(13,7) au noeud d'extrémité 21.

De même, il détermine lors des étapes E8 et E9 les bandes passantes requises et transmet lors de l'étape E10 le message M32(13,8), respectivement M33(10,13), au noeud d'acheminement 13, respectivement au noeud d'extrémité 24.

Le noeud d'acheminement 13 transmet ensuite M41(13,8), respectivement M42(13,5), au noeud d'extrémité 22, respectivement 23.

Ultérieurement, lorsque le noeud d'extrémité 25, de bande passante requise de 9 Mbits/s, doit être ajouté à l'arbre, l'adjonction de ce noeud d'extrémité est réalisée selon le procédé comme illustré sur la figure 2.

Le noeud racine 10 transmet deux messages de demande d'ouverture de connexion :
- le premier N1(13, 5), transmis au noeud d'extrémité 20, sur la branche aval à travers laquelle le noeud d'extrémité 20 est connecté à l'arbre. La bande passante requise le sens montant correspond à celle de ce noeud, soit de cinq Mbits/s. La bande passante requise pour le sens descendant correspond à la plus grande valeur prise dans l'ensemble des bandes passantes requises respectives des noeuds d'extrémité 21 à 25 et le noeud d'acheminement 12 en tant que noeud d'extrémité, c'est-à-dire max{7,8,5,13,9,10}, soit 13 Mbits/s.
- le deuxième N2(5,13), transmis au noeud d'acheminement 11, sur la branche aval à travers laquelle les flots des noeuds d'extrémité 21 à 25 et le noeud d'acheminement 12 en tant que noeud d'extrémité, sont acheminés.

Sur réception du message N2(5,13), le noeud d'acheminement 11 détermine que les bandes passantes ne doivent pas être modifiées et transmet le message N3(5,13) au noeud d'acheminement 12.

Sur réception du message N3(5,13), le noeud d'acheminement 12 détermine pour chaque branche aval lors de l'étape E11, les bandes passantes requises pour les flots montant et descendant.

A titre d'exemple, pour la branche vers le noeud d'extrémité 21, la bande passante pour le sens montant correspond à celle requise pour ce noeud d'extrémité, soit 7 Mbits/s. Pour le sens descendant, elle correspond à la plus grande valeur prise dans l'ensemble constitué de la bande passante requise pour la branche amont (vers le noeud 11) et de celles des autres branches aval issues du noeud (vers le noeud d'acheminement 13, vers le noeud d'extrémité 24 et lui-même en tant que noeud d'extrémité), c'est-à-dire max{5,9,13,10}. Le noeud transmet donc le message N31(13,7) au noeud d'extrémité 21.

De même, il détermine lors de l'étape E11 les bandes passantes requises et transmet le message N32(13,9), respectivement N33(10,13), au noeud d'acheminement 13, respectivement au noeud d'extrémité 24.

Le noeud d'acheminement 13 transmet ensuite N41(13,8), respectivement N42(13,5), au noeud d'extrémité 22, respectivement 23. Pour la branche aval vers le noeud d'extrémité 25, le noeud d'acheminement 13 transmet le message N43(13,9) à ce dernier.

On notera que la description a été faite dans le cas particulier d'un réseau de communication MPLS, supportant le protocole RSVP-TE. Toutefois, ce procédé peut être mis en oeuvre dans d'autres types de réseaux de communication, dès lors qu'il est possible d'établir dans ce réseau des connexions avec réseau de ressources. Il s'agit de réseaux de réseaux de transport de paquets en mode connecté. A titre d'exemple, un réseau de communication ATM, pour "Asynchronous Transfer Mode", supportant le protocole PNNI-ATM, pour " Asynchronous Transfer Mode Signaling Private Network-to-Network Interface", permet d'établir de telles connexions. Ainsi, un message de demande d'ouverture de connexion bidirectionnelle avec réservation de ressources correspond à un message Setup et un message de confirmation de connexion correspond à un message Connect par exemple.

La figure 4 représente un noeud 300 d'un réseau de communication. Ce noeud est susceptible d'appartenir à un arbre comprenant un noeud racine et des branches reliant des noeuds deux à deux, à partir du noeud racine jusqu'aux noeuds d'extrémité, cet arbre étant prévu pour faire communiquer entre eux les noeuds d'extrémité.

Le noeud 300 comprend :
- un module 302 de réception, agencé pour recevoir une demande d'ouverture de connexion bidirectionnelle avec réservation de ressources à travers une branche amont, ladite demande comprenant une bande passante requise pour un flot descendant à travers ladite branche amont ;
- un module 304 de détermination d'une bande passante requise pour le flot descendant, agencé pour déterminer, pour une première branche aval issue dudit noeud, une bande passante requise pour le flot descendant, en fonction de la bande passante requise pour le flot descendant à travers la branche amont et de celle requise pour un flot provenant d'au moins un noeud d'extrémité à travers au moins une deuxième branche aval issue dudit noeud ;
- un module 306 d'envoi d'une nouvelle demande d'ouverture de connexion bidirectionnelle avec réservation de ressources, comprenant la bande passante déterminée pour une première branche aval issue dudit noeud, à un noeud de ladite branche, voisin du noeud ;
- un module 308 de commande, agencé pour commander pour l'ensemble des branches aval issues dudit noeud les moyens de détermination et les moyens d'envoi, le cas échéant.

Le module 304 est en outre agencé pour déterminer, pour une branche aval issue du noeud, une bande passante requise pour un flot montant, en fonction de la bande passante requise à travers ladite première branche aval pour un flot montant provenant d'au moins un noeud d'extrémité.

Le noeud comprend également un module 310 de réservation de ressources, agencé pour réserver la bande passante requise pour un flot montant et pour transmettre une confirmation de connexion, comprenant la bande passante requise pour le flot descendant reçue dans une demande d'ouverture de connexion bidirectionnelle.

L'invention concerne également un système de communication, comprenant des noeuds tels que décrits précédemment, organisés suivant un arbre comprenant un noeud racine et des branches reliant les noeuds deux à deux, à partir du noeud racine jusqu'à des noeuds d'extrémité, cet arbre étant prévu pour faire communiquer entre eux les noeuds d'extrémité. Le noeud racine est un noeud tel que décrit précédemment et comprend également des moyens de transmission, agencés pour transmettre une demande d'ouverture de connexion bidirectionnelle initiale sur la pluralité de branches permettant d'atteindre la pluralité de noeuds d'extrémité.

Les modules 302, 304, 306, 308 et 310 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par un noeud du réseau de communication. L'invention concerne donc aussi :
- un programme pour noeud d'un réseau de communication, pour faire communiquer entre eux une pluralité de noeuds d'extrémité, comprenant des instructions de programme destinées à commander l'exécution de celles des étapes du procédé précédemment décrit qui sont exécutées par ledit noeud, lorsque ledit programme est exécuté par celui-ci ;
- un support d'enregistrement lisible par un noeud d'un réseau de communication sur lequel est enregistré le programme pour noeud d'un réseau de communication.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé pour faire communiquer entre eux une pluralité de noeuds d'extrémité (20-24) à travers un arbre établi dans un réseau de communication, ledit réseau comprenant des moyens agencés pour obtenir une organisation de noeuds d'acheminement (10-13) du réseau suivant un arbre, l'arbre comprenant un noeud (10) initiateur de l'arbre, dit noeud racine, et des branches reliant les noeuds deux à deux, à partir du noeud racine jusqu'aux noeuds d'extrémité,
une branche étant dite aval si elle descend dans l'arborescence vers au moins un des noeuds d'extrémité et une branche étant dite amont si elle remonte dans l'arborescence vers le noeud racine,
ledit procédé comprenant les étapes suivantes, mises en oeuvre par un noeud d'acheminement :
pour un noeud jouant le rôle du noeud racine dans l'arborescence :
a1- une étape de réception (E1) d'une demande d'établissement de l'arbre et une liste desdits noeuds d'extrémité, leurs bandes passantes requises respectives et un ensemble de routes dans lequel une route comprend une liste de noeuds permettant de joindre un des noeuds d'extrémité, sur lesquelles les branches dudit arbre s'appuient,
et pour un noeud ne jouant pas le rôle du noeud racine dans l'arborescence :
a2- une étape de réception (E2) d'une demande d'ouverture de connexion bidirectionnelle avec réservation de ressources en provenance d'un autre noeud d'acheminement à travers une branche amont, ladite demande comprenant une bande passante requise pour un flot provenant dudit autre noeud, dit flot descendant, un ensemble de routes et les bandes passantes requises respectivement par les noeuds d'extrémité pour leur flot montant respectif;
b- une étape de détermination (E7) d'un ensemble de branches, comprenant les branches aval issues dudit noeud d'acheminement et permettant de joindre un ou des noeuds d'extrémité raccordés à l'arbre au travers desdites branches aval, à partir de l'ensemble de routes reçu ;
c- une étape de détermination (E9), pour une première branche aval dudit ensemble de branches déterminé, d'une bande passante requise pour un flot descendant, en fonction de la bande passante requise pour le flot descendant à travers la branche amont reçue lorsque le noeud ne joue pas le rôle du noeud racine dans l'arborescence, et de celle requise pour au moins un flot provenant d'un des noeuds d'extrémité à travers au moins une deuxième branche aval dudit ensemble de branches déterminé ; et
d- une étape d'envoi (E10) d'une nouvelle demande d'ouverture de connexion bidirectionnelle avec réservation de ressources, comprenant la bande passante déterminée, à un noeud de la première branche aval, voisin du noeud d'acheminement,
les étapes c et d étant, le cas échéant, réitérées pour l'ensemble des branches aval à traiter,
la connexion bidirectionnelle avec réservation de ressources sur une branche aval étant établie sur réception en provenance d'un noeud d'acheminement voisin situé à l'autre extrémité de ladite branche aval d'une confirmation de connexion.

2. Procédé selon la revendication 1 comprenant en outre :
e- une étape de détermination (E8), pour ladite première branche aval reliée audit noeud d'acheminement, d'une bande passante requise pour un flot montant, en fonction d'une bande passante requise à travers ladite première branche aval pour un flot provenant d'au moins un noeud d'extrémité,
la nouvelle demande d'ouverture de connexion bidirectionnelle transmise à l'étape d comprenant ladite bande passante requise pour le flot montant déterminée pour ladite première branche aval et les étapes c, d et e étant, le cas échéant, réitérées pour l'ensemble des branches aval reliées audit noeud d'acheminement.

3. Procédé selon la revendication 2, comprenant en outre l'étape suivante mise en oeuvre par un noeud d'extrémité recevant une demande d'ouverture de connexion bidirectionnelle,
- une étape de réservation (E6) de ressources, dans laquelle le noeud d'extrémité réserve la bande passante requise pour le flot montant et transmet une confirmation de connexion, comprenant la bande passante requise pour le flot descendant reçue dans ladite demande.

4. Procédé selon l'une quelconque des revendications précédentes, comprenant en outre une étape d'initialisation (E1), dans laquelle le noeud racine transmet une demande d'ouverture de connexion bidirectionnelle sur la pluralité de branches permettant d'atteindre la pluralité de noeuds d'extrémité.

5. Procédé selon l'une quelconque des revendications précédentes, dans lequel, les noeuds d'extrémité étant susceptibles de communiquer simultanément, une bande passante requise pour un flot descendant, pour une première branche aval issue dudit noeud d'acheminement, est déterminée en fonction de la somme des bandes passantes requises respectives pour des flots susceptibles d'être acheminés à travers ladite branche.

6. Procédé selon l'une quelconque des revendications 1 à 4, dans lequel, les noeuds étant susceptibles de communiquer alternativement, une bande passante requise pour un flot descendant, pour une première branche aval issue dudit noeud d'acheminement, est déterminée en fonction du maximum parmi les bandes passantes requises respectives pour des flots susceptibles d'être acheminés à travers ladite branche.

7. Procédé selon l'une quelconque des revendications précédentes, comprenant une étape de mise à jour de la connexion (E11), sur réception d'une demande d'ouverture de connexion bidirectionnelle relative à une connexion existante.

8. Noeud (300) d'un réseau de communication, appartenant à un arbre comprenant un noeud initiateur de l'arbre, dit noeud racine, et des branches reliant des noeuds deux à deux, à partir du noeud racine jusqu'à des noeuds d'extrémité, ledit arbre étant prévu pour faire communiquer entre eux les noeuds d'extrémité,
une branche étant dite aval si elle descend dans l'arborescence vers au moins un des noeuds d'extrémité et une branche étant dite amont si elle remonte dans l'arborescence vers le noeud racine,
ledit noeud comprenant :
- des moyens (302) de réception, agencés pour recevoir une demande d'établissement de l'arbre et une liste desdits noeuds d'extrémité, leurs bandes passantes requises respectives et un ensemble de routes dans lequel une route comprend une liste de noeuds permettant de joindre un des noeuds d'extrémité, sur lesquelles les branches dudit arbre s'appuient, lorsque le noeud joue le rôle du noeud racine dans l'arborescence, ou pour recevoir une demande d'ouverture de connexion bidirectionnelle avec réservation de ressources en provenance d'un autre noeud d'acheminement à travers une branche amont, ladite demande comprenant une bande passante requise pour un flot provenant dudit autre noeud, dit flot descendant, un ensemble de routes, et les bandes passantes requises respectivement par les noeuds d'extrémité pour leurs flots montants respectifs, lorsque le noeud ne joue pas le rôle du noeud racine dans l'arborescence ;
- des moyens (304) de détermination d'une bande passante requise pour un flot descendant, agencés pour déterminer, pour une première branche aval dudit ensemble de branches déterminé, une bande passante requise pour un flot descendant, en fonction d'une bande passante requise pour le flot descendant à travers la branche amont reçue lorsque le noeud ne joue pas le rôle du noeud racine dans l'arborescence, et de celle requise pour au moins un flot provenant d'un des noeuds d'extrémité à travers au moins une deuxième branche aval reliée audit noeud ;
- des moyens (306) d'envoi d'une nouvelle demande d'ouverture de connexion bidirectionnelle avec réservation de ressources, comprenant la bande passante déterminée pour une première branche aval reliée audit noeud, à un noeud de ladite première branche, voisin du noeud ;
- des moyens (308) de commande, agencés pour déterminer un ensemble de branches, comprenant les branches aval issues dudit noeud et permettant de joindre un ou des noeuds d'extrémité raccordés à travers l'arbre au travers desdites branches, à partir de l'ensemble de routes reçues et pour commander pour l'ensemble des branches aval déterminé les moyens de détermination et les moyens d'envoi, le cas échéant ;
- des moyens de réception en provenance d'un noeud d'acheminement voisin situé à l'autre extrémité d'une branche aval d'une confirmation de connexion, la connexion bidirectionnelle avec réservation de ressources sur une branche aval étant alors établie.

9. Système de communication, comprenant des noeuds selon la revendication 8, organisés suivant un arbre comprenant un noeud racine et des branches reliant les noeuds deux à deux, à partir du noeud racine jusqu'à des noeuds d'extrémité, ledit arbre étant prévu pour faire communiquer entre eux les noeuds d'extrémité, dans lequel le noeud racine comprend en outre des moyens de transmission, agencés pour transmettre une demande d'ouverture de connexion bidirectionnelle initiale sur la pluralité de branches permettant d'atteindre la pluralité de noeuds d'extrémité.

10. Programme pour noeud d'un réseau de communication, pour faire communiquer entre eux une pluralité de noeuds d'extrémité, comprenant des instructions de programme destinées à commander l'exécution de celles des étapes du procédé selon les revendications 1 à 7 qui sont exécutées par ledit noeud, lorsque ledit programme est exécuté par celui-ci.

11. Support d'enregistrement lisible par un noeud d'un réseau de communication sur lequel est enregistré le programme selon la revendication 10.

## Patentansprüche

1. Verfahren zur Herstellung einer Interkommunikation zwischen einer Vielzahl von Endknoten (20-24) über einen in einem Kommunikationsnetz erstellten Baum, wobei das Netz Mittel umfasst, die dazu vorgesehen sind, eine Organisation von Lenkknoten (10-13) des Netzes entlang eines Baums zu erhalten, wobei der Baum einen Initialisierungsknoten (10) des Baums, Wurzelknoten genannt, und Zweige umfasst, die die Knoten zwei und zwei miteinander vom Wurzelknoten bis zu den Endknoten verbinden,
wobei ein Zweig stromabwärts liegend genannt wird, wenn er in der Baumstruktur zu mindestens einem der Endknoten absteigt, und wobei ein Zweig stromaufwärts liegend genannt wird, wenn er in der Baumstruktur zu dem Wurzelknoten aufsteigt,
wobei das Verfahren die folgenden Schritte umfasst, die von einem Lenkknoten eingesetzt werden:
für einen Knoten, der die Rolle des Wurzelknotens in der Baumstruktur spielt:
a1- einen Schritt des Empfangs (E1) einer Anfrage nach Erstellung des Baums und einer Liste der Endknoten, ihrer jeweiligen erforderlichen Bandbreiten und einer Gesamtheit von Wegen, in der ein Weg eine Liste von Knoten umfasst, die es ermöglichen, einen der Endknoten zu erreichen, auf denen sich die Zweige des Baums stützen,
und für einen Knoten, der nicht die Rolle des Wurzelknotens in der Baumstruktur spielt:
a2- einen Schritt des Empfangs (E2) einer Anfrage nach Eröffnung eines bidirektionalen Anschlusses mit Reservierung von Ressourcen, die von einem anderen Lenkknoten durch einen stromaufwärtigen Zweig kommen, wobei die Anfrage eine erforderliche Bandbreite für einen vom anderen Knoten kommenden Strom, absteigender Strom genannt, eine Gesamtheit von Wegen und die Bandbreiten umfasst, die jeweils von den Endknoten für ihren jeweiligen aufsteigenden Strom erforderlich sind;
b- einen Schritt der Bestimmung (E7) einer Gesamtheit von Zweigen, umfassend die stromabwärtigen Zweige, die von dem Lenkknoten ausgehen und es ermöglichen, einen oder mehrere der Endknoten, die an den Baum über die stromabwärtigen Zweige angeschlossen sind, zu erreichen, auf Basis der empfangenen Gesamtheit von Wegen;
c- einen Schritt der Bestimmung (E9) für einen ersten stromabwärtigen Zweig der bestimmten Gesamtheit von Zweigen einer erforderlichen Bandbreite für einen absteigenden Strom in Abhängigkeit von der erforderlichen Bandbreite für den absteigenden Strom durch den empfangenen stromaufwärtigen Zweig, wenn der Knoten nicht die Rolle des Wurzelknotens in der Baumstruktur spielt, und jener, die für mindestens einen Strom erforderlich ist, der von einem der Endknoten durch mindestens einen zweiten stromabwärtigen Zweig der bestimmten Gesamtheit von Zweigen kommt; und
d- einen Schritt des Sendens (E10) einer neuen Anfrage nach Eröffnung eines bidirektionalen Anschlusses mit Reservierung von Ressourcen, umfassend die bestimmte Bandbreite, an einen Knoten des ersten stromabwärtigen Zweiges, der zum Lenkknoten benachbart ist, wobei die Schritte c und d gegebenenfalls für die Gesamtheit der zu bearbeitenden stromabwärtigen Zweige reiteriert werden,
wobei der bidirektionale Anschluss mit Reservierung von Ressourcen auf einem stromabwärtigen Zweig bei Empfang eine Anschlussbestätigung von einem benachbarten Lenkknoten, der sich am anderen Ende des stromabwärtigen Zweiges befindet, erstellt wird.

2. Verfahren nach Anspruch 1, ferner umfassend:
e- einen Schritt der Bestimmung (E8) für den ersten stromabwärtigen Zweig, der mit dem Lenkknoten verbunden ist, einer erforderlichen Bandbreite für einen aufsteigenden Strom in Abhängigkeit von einer erforderlichen Bandbreite durch den ersten stromabwärtigen Zweig für einen von mindestens einem Endknoten kommenden Strom,
wobei die neue Anfrage nach Eröffnung eines bidirektionalen Anschlusses, die in Schritt d übertragen wird, die erforderliche Bandbreite für den aufsteigenden Strom umfasst, die für den ersten absteigenden Zweig bestimmt wurde, und wobei die Schritte c, d und e gegebenenfalls für die Gesamtheit der stromabwärtigen Zweige, die mit dem Lenkknoten verbunden sind, reiteriert werden.

3. Verfahren nach Anspruch 2, ferner umfassend den folgenden Schritt, der von einem Endknoten eingesetzt wird, der eine Anfrage nach Eröffnung eines bidirektionalen Anschlusses empfängt,
- einen Schritt der Reservierung (E6) von Ressourcen, in dem der Endknoten die erforderliche Bandbreite für den aufsteigenden Strom reserviert und eine Anschlussbestätigung überträgt, umfassend die erforderliche Bandbreite für den absteigenden Strom, die in der Anfrage empfangen wird.

4. Verfahren nach einem der vorhergehenden Ansprüche, ferner umfassend einen Schritt der Initialisierung (E1), in dem der Wurzelknoten eine Anfrage nach Eröffnung eines bidirektionalen Anschlusses auf der Vielzahl von Zweigen, die es ermöglichen, die Vielzahl von Endknoten zu erreichen, überträgt.

5. Verfahren nach einem der vorhergehenden Ansprüche, bei dem, wobei die Endknoten geeignet sind, gleichzeitig zu kommunizieren, eine erforderliche Bandbreite für einen absteigenden Strom für einen ersten stromabwärtigen Zweig, der von dem Lenkknoten kommt, in Abhängigkeit von der Summe der jeweiligen erforderlichen Bandbreiten für Ströme, die durch den Zweig gelenkt werden können, bestimmt wird.

6. Verfahren nach einem der Ansprüche 1 bis 4, bei dem, wobei die Knoten geeignet sind, alternierend zu kommunizieren, eine erforderliche Bandbreite für einen absteigenden Strom für einen ersten stromabwärtigen Zweig, der von dem Lenkknoten kommt, in Abhängigkeit von dem Maximum unter den jeweiligen erforderlichen Bandbreiten für Ströme, die durch den Zweig gelenkt werden können, bestimmt wird.

7. Verfahren nach einem der vorhergehenden Ansprüche, umfassend einen Schritt der Aktualisierung des Anschlusses (E11) bei Empfang einer Anfrage nach Eröffnung eines bidirektionalen Anschlusses in Zusammenhang mit einem bestehenden Anschluss.

8. Knoten (300) eines Kommunikationsnetzes, der einem Baum angehört, umfassend einen Initialisierungsknoten des Baums, Wurzelknoten genannt, und Zweige, die Knoten zwei und zwei miteinander vom Wurzelknoten bis zu Endknoten verbinden, wobei der Baum dazu vorgesehen ist, die Endknoten miteinander kommunizieren zu lassen,
wobei ein Zweig stromabwärts liegend genannt wird, wenn er in der Baumstruktur zu mindestens einem der Endknoten absteigt, und ein Zweig stromaufwärts liegend genannt wird, wenn er in der Baumstruktur zu dem Wurzelknoten aufsteigt,
wobei der Knoten umfasst:
- Empfangsmittel (302), die dazu vorgesehen sind, eine Anfrage nach Erstellung des Baums und eine Liste der Endknoten, ihre jeweiligen erforderlichen Bandbreiten und eine Gesamtheit von Wegen zu empfangen, in der ein Weg eine Liste von Knoten umfasst, die es ermöglichen, einen der Endknoten zu erreichen, auf denen sich die Zweige des Baums stützen, wenn der Knoten die Rolle des Wurzelknotens in der Baumstruktur spielt, oder eine Anfrage nach Eröffnung eines bidirektionalen Anschlusses mit Reservierung von Ressourcen, die von einem anderen Lenkknoten durch einen stromaufwärtigen Zweig kommen, zu empfangen, wobei die Anfrage eine erforderliche Bandbreite für einen vom anderen Knoten kommenden Strom, absteigender Strom genannt, eine Gesamtheit von Wegen und die Bandbreiten umfasst, die jeweils von den Endknoten für ihre jeweiligen aufsteigenden Ströme erforderlich sind, wenn der Knoten nicht die Rolle des Wurzelknotens in der Baumstruktur spielt;
- Mittel (304) zur Bestimmung einer erforderlichen Bandbreite für einen absteigenden Strom, die dazu vorgesehen sind, für einen ersten stromabwärtigen Zweig der bestimmten Gesamtheit von Zweigen eine erforderliche Bandbreite für einen absteigenden Strom in Abhängigkeit von einer erforderlichen Bandbreite für den absteigenden Strom durch den stromaufwärtigen Zweig zu bestimmen, wenn der Knoten nicht die Rolle des Wurzelknotens in der Baumstruktur spielt, und jener, die für mindestens einen Strom erforderlich ist, der von einem der Endknoten durch mindestens einen zweiten stromabwärtigen Zweig, der mit dem Knoten verbunden ist, kommt;
- Mittel (306) zum Senden einer neuen Anfrage nach Eröffnung eines bidirektionalen Anschlusses mit Reservierung von Ressourcen, umfassend die bestimmte Bandbreite für einen ersten stromabwärtigen Zweig, der mit dem Knoten verbunden ist, an einen Knoten des ersten Zweiges, der zum Knoten benachbart ist;
- Steuermittel (308), die dazu vorgesehen sind, eine Gesamtheit von Zweigen, umfassend die stromabwärtigen Zweige, die von dem Knoten kommen und es ermöglichen, einen oder mehrere Endknoten zu erreichen, die durch den Baum durch die Zweige angeschlossen sind, auf Basis der Gesamtheit von empfangenen Wegen, zu bestimmen, und für die bestimmte Gesamtheit der stromabwärtigen Zweige gegebenenfalls die Bestimmungsmittel und die Sendemittel zu steuern;
- Mittel zum Empfang einer Anschlussbestätigung ausgehend von einem benachbarten Lenkknoten, der sich am anderen Ende eines stromabwärtigen Zweiges befindet, wobei der bidirektionale Anschluss mit Reservierung von Ressourcen auf einem stromabwärtigen Zweig nun erstellt ist.

9. Kommunikationssystem, umfassend Knoten nach Anspruch 8, die gemäß einem Baum organisiert sind, umfassend einen Wurzelknoten und Zweige, die die Knoten zwei und zwei miteinander von dem Wurzelknoten bis zu den Endknoten verbinden, wobei der Baum dazu vorgesehen ist, die Endknoten miteinander kommunizieren zu lassen, wobei der Wurzelknoten ferner Übertragungsmittel umfasst, die dazu vorgesehen sind, eine Anfrage nach Eröffnung eines ursprünglichen bidirektionalen Anschlusses auf der Vielzahl von Zweigen, die es ermöglichen, die Vielzahl von Endknoten zu erreichen, zu übertragen.

10. Programm für einen Knoten eines Kommunikationsnetzes, um eine Vielzahl von Endknoten miteinander kommunizieren zu lassen, umfassend Programmbefehle, die dazu bestimmt sind, die Ausführung jener der Schritte des Verfahrens nach den Ansprüchen 1 bis 7 zu steuern, die von dem Knoten ausgeführt werden, wenn das Programm von diesem ausgeführt wird.

11. Von einem Knoten eines Kommunikationsnetzes lesbarer Aufzeichnungsträger, auf dem das Programm nach Anspruch 10 aufgezeichnet wird.

## Claims

1. Method for making a plurality of end nodes (20-24) communicate with one another through a tree established in a communication network, said network comprising means designed to obtain an organization of forwarding nodes (10-13) of the network according to a tree, the tree comprising an initiator node (10) of the tree, termed the root node, and branches linking the nodes pairwise, from the root node to the end nodes,
a branch being termed downstream if it descends down the tree structure to at least one of the end nodes and a branch being termed upstream if it ascends back up the tree structure to the root node,
said method comprising the following steps, implemented by a forwarding node:
for a node playing the role of the root node in the tree structure:
a1- a step (E1) of receiving a request for establishment of the tree and a list of said end nodes, their respective required bandwidths and a set of routes, in which a route comprises a list of nodes making it possible to contact one of the end nodes, on which the branches of said tree stand;
and for a node not playing the role of the root node in the tree structure:
a2- a step (E2) of receiving a bidirectional connection opening request with reservation of resources originating from another forwarding node through an upstream branch, said request comprising a bandwidth required for a flow originating from said other node, termed a downgoing flow, a set of routes and the bandwidths required respectively by the end nodes for their respective upgoing flow;
b- a step (E7) of determining a set of branches, comprising the downstream branches arising from said forwarding node and making it possible to contact one or more end nodes attached to the tree through said downstream branches, on the basis of the set of routes received;
c- a step (E9) of determining, for a first downstream branch of said determined set of branches, a bandwidth required for a downgoing flow, as a function of the bandwidth required for the downgoing flow through the upstream branch received when the node does not play the role of the root node in the tree structure, and of that required for at least one flow originating from one of the end nodes through at least one second downstream branch of said determined set of branches; and
d- a step (E10) of dispatching a new bidirectional connection opening request with reservation of resources, comprising the bandwidth determined, to a node of the first downstream branch, neighbour of the forwarding node,
steps c and d being, if appropriate, repeated for the set of downstream branches to be processed,
the bidirectional connection with reservation of resources on a downstream branch being established on receipt of a confirmation of connection originating from a neighbour forwarding node situated at the other end of the said downstream branch.

2. Method according to Claim 1 furthermore comprising:
e- a step (E8) of determining, for said first downstream branch linked to said forwarding node, a bandwidth required for an upgoing flow, as a function of a bandwidth required through said first downstream branch for a flow originating from at least one end node,
the new bidirectional connection opening request transmitted in step d comprising said bandwidth required for the upgoing flow and determined for said first downstream branch and steps c, d and e being, if appropriate, repeated for the set of downstream branches linked to said forwarding node.

3. Method according to Claim 2, furthermore comprising the following step implemented by an end node receiving a bidirectional connection opening request,
- a step (E6) of reserving resources, in which the end node reserves the bandwidth required for the upgoing flow and transmits a confirmation of connection, comprising the bandwidth required for the downgoing flow and received in said request.

4. Method according to any one of the preceding claims, furthermore comprising an initialization step (E1), in which the root node transmits a bidirectional connection opening request on the plurality of branches making it possible to reach the plurality of end nodes.

5. Method according to any one of the preceding claims, in which, the end nodes being liable to communicate simultaneously, a bandwidth required for a downgoing flow, for a first downstream branch arising from said forwarding node, is determined as a function of the sum of the respective bandwidths required for flows liable to be forwarded through said branch.

6. Method according to any one of Claims 1 to 4, in which, the nodes being liable to communicate alternately, a bandwidth required for a downgoing flow, for a first downstream branch arising from said forwarding node, is determined as a function of the maximum from among the respective bandwidths required for flows liable to be forwarded through said branch.

7. Method according to any one of the preceding claims, comprising a step of updating the connection (E11), on receipt of a bidirectional connection opening request relating to an existing connection.

8. Node (300) of a communication network, belonging to a tree comprising an initiator node of the tree, termed the root node, and branches linking nodes pairwise, from the root node to the end nodes, said tree being devised to make the end nodes communicate with one another,
a branch being termed downstream if it descends down the tree structure to at least one of the end nodes and a branch being termed upstream if it ascends back up the tree structure to the root node,
said node comprising:
- reception means (302), designed to receive a request for establishment of the tree and a list of said end nodes, their respective required bandwidths and a set of routes, in which a route comprises a list of nodes making it possible to contact one of the end nodes, on which the branches of said tree stand, when the node plays the role of the root node in the tree structure; or to receive a bidirectional connection opening request with reservation of resources originating from another forwarding node through an upstream branch, said request comprising a bandwidth required for a flow originating from said other node, termed a downgoing flow, a set of routes and the bandwidths required respectively by the end nodes for their respective upgoing flows, when the node does not play the role of the root node in the tree structure;
- means (304) for determining a bandwidth required for a downgoing flow, designed to determine, for a first downstream branch of said determined set of branches, a bandwidth required for a downgoing flow, as a function of a bandwidth required for the downgoing flow through the upstream branch received when the node does not play the role of the root node in the tree structure, and of that required for at least one flow originating from one of the end nodes through at least one second downstream branch linked to said node;
- means (306) for dispatching a new bidirectional connection opening request with reservation of resources, comprising the bandwidth determined for a first downstream branch linked to said node, to a node of said first branch, neighbour of the node;
- control means (308), designed to determine a set of branches, comprising the downstream branches arising from said node and making it possible to contact one or more end nodes attached via the tree through said branches, on the basis of the set of routes received and for controlling for the determined set of downstream branches the determining means and the dispatching means, if appropriate;
- means for receiving a confirmation of connection originating from a neighbour forwarding node situated at the other end of a downstream branch, the bidirectional connection with reservation of resources on a downstream branch then being established.

9. Communication system, comprising nodes according to Claim 8, organized according to a tree comprising a root node and branches linking the nodes pairwise, from the root node to the end nodes, said tree being devised to make the end nodes communicate with one another, in which the root node furthermore comprises transmission means, designed to transmit an initial bidirectional connection opening request on the plurality of branches making it possible to reach the plurality of end nodes.

10. Program for node of a communication network, for making a plurality of end nodes communicate with one another, comprising program instructions intended to control the execution of those of the steps of the method according to Claims 1 to 7 that are executed by said node, when said program is executed by the latter.

11. Recording medium, readable by a node of a communication network on which the program according to Claim 10 is recorded.
